# EUROPEAN PATENT SPECIFICATION

(11) **EP 1 837 848 B1**
(45) Date of publication and mention of the grant of the patent: **27.03.2013**
(21) Application number: 07111012.6
(22) Date of filing: 28.10.1999
(51) Int. Cl.: G09G 3/28

(54) **Method for driving a gas-discharge panel**
Verfahren zur Steuerung einer Gasentladungsanzeige
Méthode de commande d'un panneau d'affichage à décharge à gaz

(30) Priority: 20.11.1998 JP 33044798
(43) Date of publication of application: 26.09.2007
(62) Divisional of application: 99308563.8
(73) Proprietor: Hitachi Plasma Patent Licensing Co., Ltd., Tokyo (JP)
(72) Inventor: Hashimoto, Yasunobu, Kanagawa 211-8588 (JP); Yoneda, Yasushi, Kanagawa 211-8588 (JP); Awamoto, Kenji, Kanagawa 211-8588 (JP); Iwasa, Seiichi, Kanagawa 211-8588 (JP)
(74) Representative: Fenlon, Christine Lesley

(56) References cited:
- EP-A- 0 762 373
- EP-A- 0 810 577
- WO-A-97/20301
- US-A- 5 663 741

## Description

### BACKGROUND OF THE INVENTION

### Field of the Invention

The present invention relates to a method for driving a gas-discharge panel such as a plasma display panel (PDP) or a plasma addressed liquid crystal (PALC), and a display device using the gas-discharge panel.

A plasma display panel is coming into wide use as a large screen display device for a television set taking advantage of commercialization of color display. Along with the expansion of the market, requirement for reliability of operation has become more rigorous.

### Description of the prior art

As a color display device, an AC type plasma display panel having three-electrode surface discharging structure is commercialized. This device has a pair of main electrodes for sustaining discharge disposed for each row of matrix display, and an address electrode for each column. Diaphragms for suppressing discharge interference between cells are disposed like a stripe. A discharge space is continuous over the entire length of each column. This AC type plasma display panel utilizes a memory function performed by wall charge on a dielectric layer covering the main electrodes on occasion of displaying. Namely, one pair of main electrodes is assigned to a scanning electrode and the address electrode is assigned to a data electrode for addressing by a line-sequential format for controlling the charging state of each cell corresponding to the display contents. After that, a sustaining voltage (Vs) having alternating polarities is applied to all pairs of the main electrodes simultaneously. Thus, a cell voltage (Vc) that is a sum of the wall voltage (Vw) and the applied voltage can exceeds a discharge starting voltage (Vf) only in a cell having a wall discharge above a predetermined quantity, so that the surface discharge occurs along the surface of the substrate for each application of the sustaining voltage. By shortening the period of applying the sustaining voltage, continuous displaying state can be observed.

Concerning a display of sequential images like a television, the addressing and the sustaining are repeated. In general, in order to prevent fluctuations of the display, preparation of addressing is performed for making the charged state uniform over the entire screen, after sustaining of an image and before addressing of the next image.

In the conventional addressing, the charged quantity of the wall charge (wall voltage) is altered by generating the addressing discharge in either the cell to be lighted or the cell not to be lighted. In the writing address format, the wall charge remaining in the display screen is erased as preparation for addressing, and the addressing discharge is generated only in the cell to be lighted, so that an adequate quantity of wall charge is generated in the cell. In the erasing address format, an adequate quantity of wall charge is generated in all cells as preparation of addressing, and then the addressing discharge is generated only in the cell not to be lighted, so that the wall charge in the relevant cell 1 is erased.

WO 97/20301 discloses a plasma display panel which includes circuitry for applying row signals sequentially to a plurality of row electrodes. Each row signal includes a set-up period, an address period and a sustain period. A row signal during the set-up period includes both a positive-going ramp voltage and a negative-going ramp voltage, both ramp voltages causing a discharge of each pixel site along an associated row electrode. Both ramp voltages exhibit a slope that is set to assure that current flow through each pixel site remains in a positive resistance region of the gas's discharge characteristic, thus assuring a relatively constant voltage drop across the discharging gas, thus resulting in predictable wall voltage states. The set-up period thereby creates standardized wall potentials at each pixel site along each row electrode. Address circuitry applies, during the address period, data pulses to a plurality of column electrodes to enable selective discharge of the pixel sites in accordance with data pulses and in synchronism with the row signals.

EP 0 810 577 discloses a plasma display device provided with a triple-electrode surface-discharge AC plasma display panel in which the address discharge is controlled such that a potential difference occurring across a discharge slit between first and second electrodes selected for display is smaller than a potential difference occurring across a non-discharge slit between the first electrode not selected for display and the second electrode selected for display.

### SUMMARY OF THE INVENTION

In the above-mentioned line-sequential addressing, the charge that contributes to the priming effect helping the addressing discharge occur easily is a space charge remaining after generated by the discharge for the preparation of addressing and a space charge generated by addressing discharge in the cell in the upstream side of the row selection (scanning). However, if the cell in the upstream side is not required to generate the addressing discharge (like a cell not to be lighted in the write addressing format), only the space charge remaining after generated at the stage of the preparation for addressing can contribute to the priming effect since the addressing discharge is not generated in the upstream side. Since the space charge decreases along with time passing, the remaining quantity of the space charge will be smaller, as the addressing is coming to an end, so that delay of discharging becomes larger. For this reason, in a cell of a row that is selected at relatively late timing, there was a case where the addressing discharge cannot occur within the row selection period (scanning period for one row) defined by a scan pulse width, resulting in a display defect. An example of the display defect is a "black noise" in which a part or a whole of the upper edge of a belt cannot be lighted, when the belt is displayed in the lower portion of the screen that is scanned vertically. Especially, in the structure in which the discharge space is defined by a diaphragm having a stripe pattern for each column, movement of the space charge generating the priming effect can occur only in each column, resulting in a display defect.

A method for improving the above-mentioned problem is proposed in Japanese Unexamined Patent Publication 9-6280(A), in which a priming discharge for forming the space charge is generated in the row to be selected before applying the scanning pulse that selects the row. The priming discharge is generated in all cells of the row regardless of the display contents, so that the addressing discharge almost surely occurs.

However, in the conventional driving method, since a priming pulse for generating the priming discharge is applied to the next row to be selected at the same time as application of the scanning pulse to the selected row, it is difficult to optimize the pulse width and the peak value, so that the control becomes complicated. In addition, since the pulse width should be set to a little larger for ensuring generation of the priming discharge, the priming pulse should be applied for each row, and the time necessary for the addressing becomes longer. If the timing for applying the pulse is shifted between rows, the row selection period becomes a sum of the priming pulse width and the scanning pulse width, so that the time necessary for the addressing becomes even longer.

The object of the present invention is to improve the reliability of the addressing while suppressing enlargement of the time necessary for the addressing.

The invention is defined as recited in the appended claims.

In an example not falling under the scope of the invention, while addressing for controlling the state of the cell in accordance with the state setting data such as display data, it is not selected whether the addressing discharge exists or not, but the quantity of addressing discharge (movement of the electric charge). Namely, a voltage sufficient for generating addressing discharge above the minimum value regardless of the display contents is applied to all of the cells to be addressed. The intensity of the electric discharge depends on the applied voltage.

For example, when the line-sequential addressing is adopted, the space charge that contributes to the priming effect in the row that will be selected next is generated in all of the cells included in the selected row. Therefore, the addressing discharge can be certainly generated for any display pattern by performing the row selection in the order that makes the distance between the nth selected row and the (n+1)th selected row within a predetermined range so that the space charge generated by the addressing discharge becomes effective. If the scanning pulse width is shortened in accordance with increase of the probability of the addressing discharge, the display can be speed up.

The wall voltage can be varied by the addressing discharge in the addressing of the gas-discharge panel in which each cell is charged by the wall charge. Therefore, the wall voltage (the target value) before change is set so that the wall voltage after change becomes the desired value.

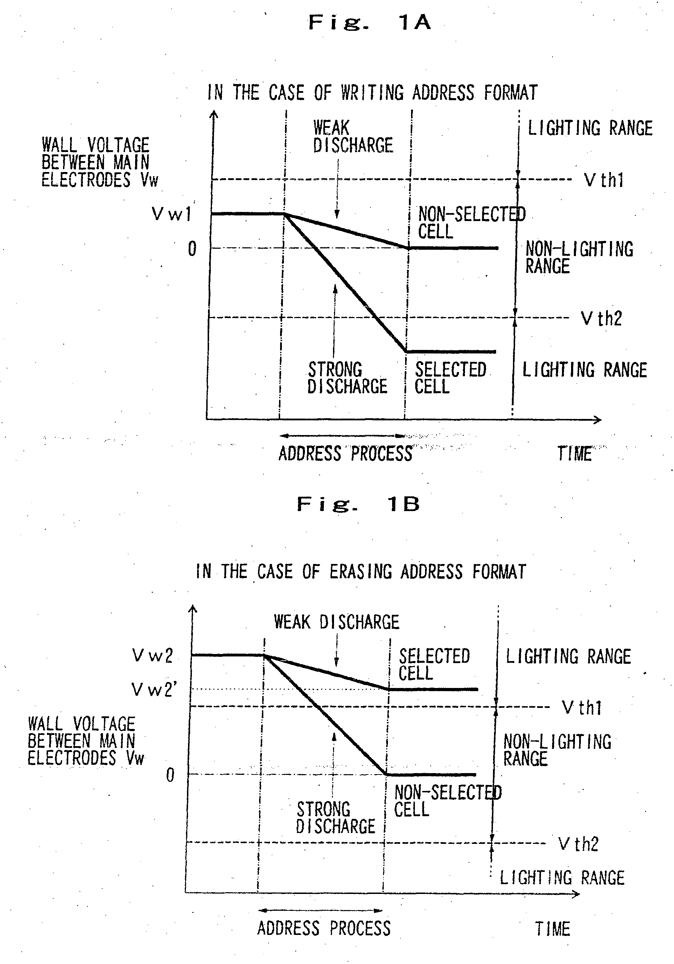

Figs. 1A and 1B show the change in the wall voltage in the addressing of the AC type plasma display panel to which the present invention is applied.

The variation of the wall voltage can be adjusted by setting the intensity of the discharge. However, the variation of the electrode potential will vary either in the direction from a high level to a low level or the opposite direction. Therefore, the combination of lighting or not lighting and the intensity of the discharge includes two patterns as described below.

In the case of writing address format, the wall voltage Vw between main electrodes is set to a value Vw1 within a non-lighting range in which the sustaining discharge cannot be generated as a preprocess of the addressing process. The non-lighting range means a range in which the cell voltage does not exceeds the discharge starting voltage even if the sustaining voltage having the same polarity with the wall voltage Vw is applied. The lower limit of the non-lighting range is the threshold value Vth2 having the negative polarity, and the upper limit of the non-lighting range is the threshold value Vth1 having the positive polarity. In the addressing process, a strong addressing discharge is generated for the selected cell (the cell to be lightened), and the wall voltage Vw is changed to a value in the lighting range in which the sustaining discharge can be generated in the polarity opposite to the previous polarity. In the non-selected cell (the cell not to be lightened), a weak addressing discharge is generated for the priming. In this case, the wall voltage Vw is changed from the value Vw1 into a lower value (zero in the figure).

In the case of erasing address format, the wall voltage Vw between main electrodes is set to a value Vw2 within a lighting range in which the sustaining discharge can be generated as a preprocess of the addressing process. In the addressing process, a strong addressing discharge is generated for the non-selected cell, and the wall voltage Vw is changed from the value Vw2 into a value in the non-lighting range (zero in the figure). In the selected cell, a weak addressing discharge is generated for the priming. In this case, the wall voltage Vw is changed from the value Vw2 into a value Vw2' in the lighting-range.

### BRIEF DESCRIPTION OF THE DRAWINGS

Figs. 1A and 1B show variations of the wall voltage in the addressing of the AC type plasma display panel to which the present invention is applied.
Fig. 2 is a schematic drawing of a plasma display device in accordance with the present invention.
Fig. 3 is a perspective view showing the inner structure of the plasma display panel.
Fig. 4 is a diagram showing a structure of the field.
Fig. 5 shows voltage waveforms in a first example of the drive sequence.
Fig. 6 shows voltage waveforms in a second example of the drive sequence.
Fig. 7 shows voltage waveforms in a third example of the drive sequence.
Fig. 8 shows voltage waveforms of the drive sequence according to the invention.
Fig. 9 is a schematic diagram of the main electrode arrangement in accordance with another example.
Fig. 10 shows voltage waveforms in a fifth example of the drive sequence.
Fig. 11 shows voltage waveforms in a sixth example of the drive sequence.
Fig. 12 shows voltage waveforms of the addressing preparation period.

### DESCRIPTION OF THE PREFERRED EMBODIMENTS

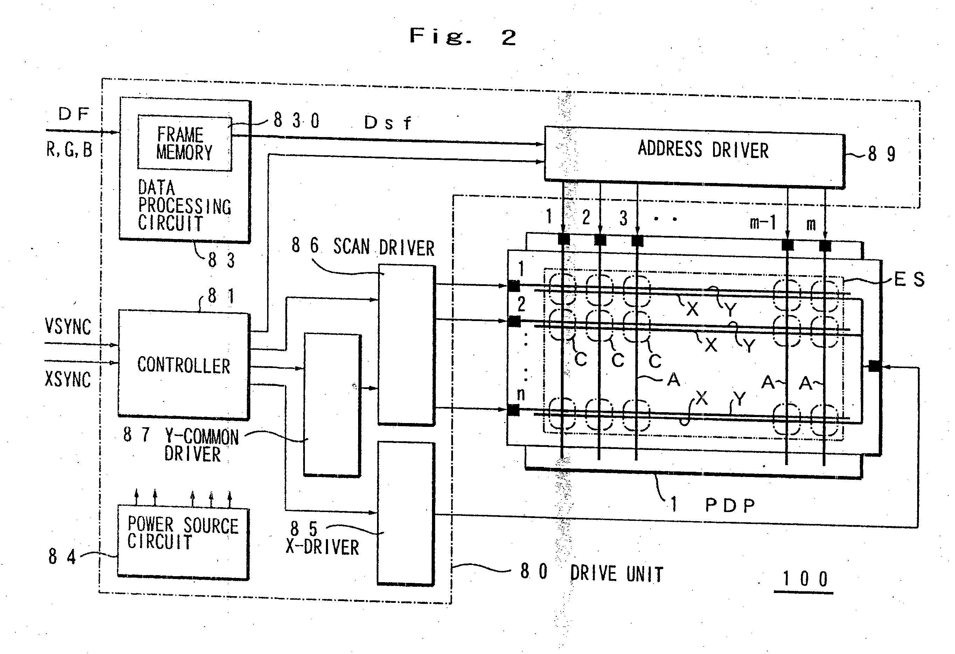

Fig. 2 is a schematic drawing of a plasma display device 100 in accordance with the present invention.

The plasma display device 100 includes an AC type plasma display panel 1 that is of a thin-type and matrix-type color display device and a driving unit 80 for selectively lighting a plurality of cells C that make up a screen ES having m columns and n rows. The plasma display device 100 is used for a wall-hung television set or a monitor of a computer set.

The plasma display panel 1 has main electrodes X, Y that makes up electrodes pairs and are arranged in parallel for generating sustaining discharge (or also called display discharge). The main electrodes X, Y and address electrodes A cross each other in each cell C so as to form the three-electrode plane discharge structure. The main electrodes X, Y extend in the row direction (the horizontal direction) of the screen ES, and the main electrode Y is used for a scanning electrode that selects cells C row by row in addressing. The address electrodes A extend in the column direction (the vertical direction), and are used for a data electrode that select cells C row by row. The area where the group of the main electrodes and the group of the address electrodes in the substrates surface becomes the display area (i.e., the screen ES).

The driving unit 80 includes a controller 81, data processing circuit 83, a power source circuit 84, an X-driver 85, a scan driver 86, a Y-common driver 87, and an address driver 89. The driving unit 80 is disposed at the rear side of the plasma display panel 1. Each driver and the electrodes of the plasma display panel 1 are connected electrically by a flexible cable (not shown). The driving unit 80 is provided with field data DF indicating intensity levels (gradation level) of colors R, G and B of each pixel from an external equipment such as a TV tuner or a computer, as well as various synchronizing signals.

The field data DF are temporarily stored in a frame memory 830 in the data processing circuit 83, and then are converted into subfield data Dsf. The subfield data Dsf are stored in the frame memory 830 and transferred to the address driver 89 at proper time. The value of each bit of the subfield data Dsf is information indicating whether the cell is required to be lightened or not in the subfield for realizing the gradation mentioned below. More specifically, it is information indicating whether the addressing discharge is strong or weak.

The X-driver 85 applies the driving voltage to all of the main electrodes X simultaneously. The electric commonality of the main electrodes X can be realized not only by the illustrated linkage on the panel in Fig. 2 but by wiring inside the X-driver 85 or by wiring of the connection cable. The scan driver 86 applies the driving voltage to the main electrode Y of the selected row in addressing. The Y-common driver 87 applies the driving voltage to all of the main electrodes Y simultaneously in sustaining. In addition, the address driver 89 applies the driving voltage to the total m of address electrodes A in accordance with the subfield data Dsf for generating the first or second intensity of addressing discharge. These drivers are supplied with a predetermined electric power by the power source circuit 84 via wiring conductors (not shown).

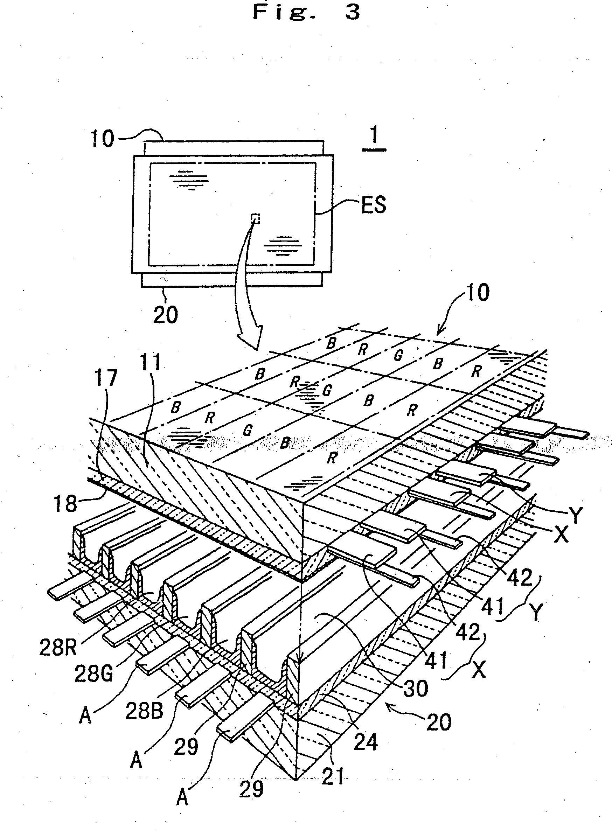

Fig. 3 is a perspective view showing the inner structure of the plasma display panel 1.

In the plasma display panel 1, a pair of main electrodes X, Y is arranged for each row on the inner side of a glass substrate 11 that is a base material of the front side substrate structure. The row is an array of cells in the horizontal direction in the screen. Each of the main electrodes X, Y includes a transparent conductive film 41 and a metal film (a bus conductor) 42, and is coated with a dielectric layer 17 that is made of low melting point glass and has thickness of approximately 30 microns. The surface of the dielectric layer 17 is provided with a protection film 18 made of magnesia (MgO) having thickness of approximately several thousands angstroms. The address electrodes A are arranged on the inner surface of a glass substrate 21 that is a base material of the rear side substrate structure, and is coated with a dielectric layer 24 having thickness of approximately 10 microns. A diaphragm 29 having linear band shape of 150 micron height is disposed between the address electrodes A on the dielectric layer 24. Discharge spaces 30 are defined by these diaphragms 29 in the row direction for each subpixel (small lighting area), and the gap size of the discharge spaces 30 is defined. Three fluorescent layers 28R, 28G, 28B for red, green and blue colors are disposed so as to cover the inner wall of the rear side including the upper portion of the address electrode A and the side wall of the diaphragm 29. The discharge space 30 is filled with a discharge gas containing neon as the main ingredient and xenon. The fluorescent layers 28R, 28G, 28B are locally pumped to emit light by ultraviolet light emitted by the xenon gas on discharge. A pixel includes three subpixels aligned in the row direction. A structure in each subpixel is the cell (display element) C. Since the arrangement pattern of the diaphragm 29 is a stripe pattern, each part of the discharge space 30 corresponding to each column is continuous in the column direction over all rows.

An exemplary method not falling under the scope of the invention for driving the plasma display panel 1 in the plasma display device 100 will be explained as follows. First, reproduction of the gradation will be explained generally, and then driving sequence that is unique to the present invention will be explained in detail.

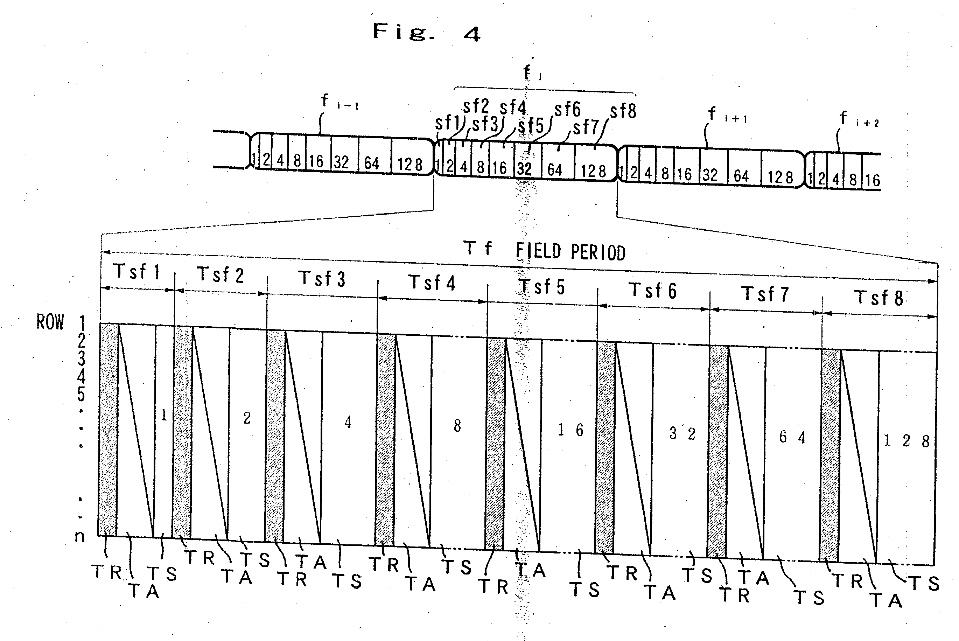

Fig. 4 shows a structure of the field.

The gradation is reproduced by controlling lighting with binary data in displaying a television image. Therefore, each field f of the sequential 1 input image is divided into, for example, eight subframes sf1, sf2, sf3, sf4, sf5, sf6, sf7 and sf8 (the numerical subscripts represent display order). In other words, each field f that makes up the frame is replaced with eight subframes sf1-sf8. Each frame is divided into eight when reproducing a non-interlace image such as an output of a computer. Weights are assigned so that the relative ratio of the intensity in these subfields sf1-sf8 becomes approximately 1:2:4:8:16:32:64:128 for setting the number of sustaining discharge. Since 256 steps of intensity can be set by combination of light/non-light of each subfield for each color, R, G, B, the number of color that can be displayed becomes 256³. It is not necessary to display subfields sf1-sf8 in the order of the weight of intensity. For example, optimizing can be performed in such a way that the subfield sf8 having a large weight is disposed at the middle of the field period Tf.

The subfield period Tsf ⱼ that is assigned to each subfield sf ⱼ (j = 1-8) includes a preparation period TR for adjusting charge by the ramp voltage, an address period TA for forming a charge distribution corresponding to a display contents and a sustain period TS for sustaining the lightened state so as to ensure the intensity corresponding to the gradation level. In each subfield period Tsf ⱼ, lengths of the preparation period TR and the address period TA are constant regardless of the weight of the intensity, while the larger the weight of the intensity, the longer the length of the sustain period TS becomes. Namely, the eight-subfield periods Tsf ⱼ corresponding to one field f are different from each other.

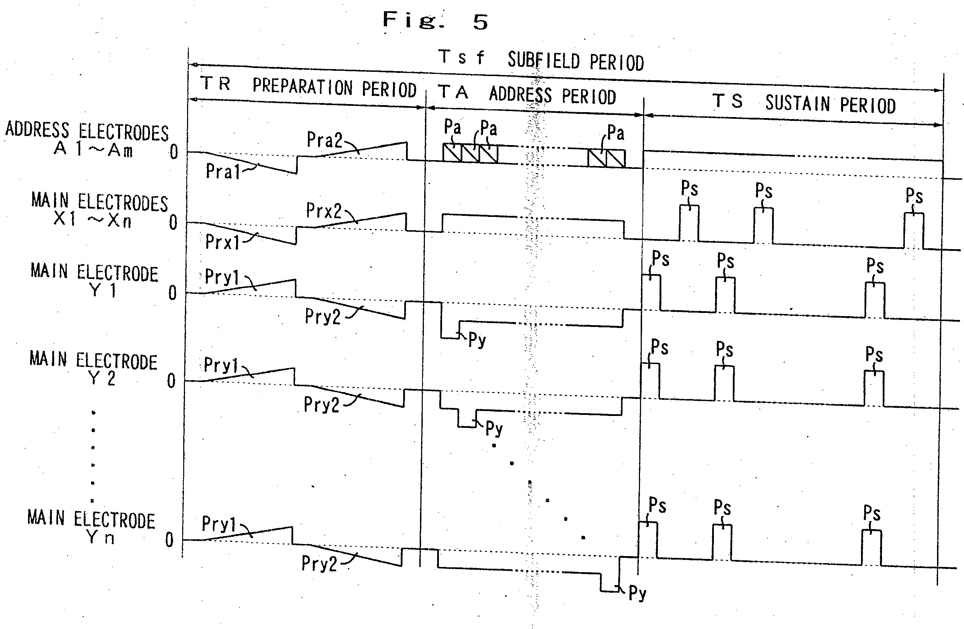

Fig. 5 is a diagram of voltage waveforms showing a first example of the drive sequence. In this figure, main electrodes X, Y are denoted with a suffix (1, 2, ···n) representing the arrangement order of the corresponding row, and the address electrodes A are denoted with a suffix (1-m) representing the arrangement order of the corresponding column. Other figures explained below will be in the same way.

The drive sequence that is repeated in every subfield is generally explained as follows.

In the preparation period TR, all of address electrodes A1-Am are supplied with the pulse Pra1 and the opposite polarity pulse Pra2 in sequence, all of the main electrodes X1-Xn are supplied with the pulse Prx1 and the opposite polarity pulse Prx2 in sequence, and all of the main electrodes Y1-Yn are supplied with the pulse Pry1 and the opposite polarity pulse Pry2 in sequence. The pulse application means to bias the electrode temporarily to a different potential from the reference potential (e.g., the ground level). In this example, pulses Pra1, Pra2, Prx1, Prx2, Pry1 and Pry2 are ramp voltage pulses having a rate of change that generates minute discharge. The pulses Pra1, Prx1 have the negative polarity, while the pulse Pry1 has the positive polarity. Application of the pulses Pra2, Prx2 and Pry2 having ramp waveforms enable the wall voltage to be adjusted into the value corresponding to the difference between the discharge starting voltage and the pulse amplitude. The pulses Pra1, Prx1 and Pry1 are applied so that the " former lightened cell" that was lightened in the former subfield and the "former non-lightened cell" that was not lightened in the former subfield generate appropriate wall voltage.

In the address period TA, the scanning pulse Py is applied to the main electrodes Y1-Yn in the arrangement order. At the same time with this row selection, an address pulse Pa having the polarity opposite to the scanning pulse Py and the peak value corresponding to the subfield data Dsf of the selected row is applied to the address electrodes A1-Am. Namely, strong discharge is generated in the selected cell, while weak discharge is generated in the non-selected cell. When the scanning pulse Py and the address pulse Pa are applied, discharge occurs between the address electrode A and the main electrode Y, which becomes a trigger for generating discharge between the main electrodes X and Y. These sequential discharges, i.e., the addressing discharge, are related to a discharge starting voltage Vf_{AY} between the address electrode A and main electrode Y (hereinafter, referred to as an electrode gap AY) and a discharge starting voltage Vf_{xy} between the main electrodes X, Y (hereinafter, referred to as an electrode gap XY). Therefore, in the above-mentioned preparation period TR, adjustment of the wall voltage is performed for both the electrode gap XY and the electrode gap AY. The wall voltage between the electrode gaps AY may be a value such that the discharge cannot occur before applying the scanning pulse Py to the main electrode Y.

In the sustain period TS, a sustain pulse Ps having a predetermined polarity (plus polarity in the illustrated example) is applied to all of the main electrodes Y1-Yn at first. Then, the sustain pulse Ps is applied to the main electrodes X1-Xn and the main electrodes Y1-Yn alternately.

In this example, the final sustain pulse Ps is applied to the main electrodes X1-Xn. When the sustain pulse Ps is applied, a surface discharge will occur in the cell that is lighted this time and has remaining wall 1 charge in the address period TA. Every time when the surface discharge occurs, the polarity of the wall voltage between electrodes changes. All of the address electrodes A1-Am are biased to the same polarity as the sustain pulse Ps in order to prevent unnecessary discharge in the sustain period TS.

The wall voltage of the electrode gap XY at the end of the preparation period TR is represented by Vw1 (X side is positive), while the minimum value of the wall voltage of the electrode gap XY when the cell is lighted in the sustain period TS is represented by V_{TH} (absolute value without polarity). In the plasma display panel 1, the main electrodes X, Y are arranged symmetrically with respect to the surface discharge gap. Therefore, the threshold levels Vth1, Vth2 shown in Figs. 1A and 1B have relationship such that Vth1 = V_{TH} and Vth2 = -V_{TH}· Concerning the selected cell, the strong addressing discharge makes the wall voltage of the electrode gap XY change from Vw1 to -V_{TH} or below. Concerning the non-selected cell, a weak addressing discharge makes the wall voltage of the electrode gap XY changes to a value higher than -V_{TH} and lower than V_{TH} (preferably zero or a value nearly equal to zero).

In order to control the addressing discharge, wall voltage is preferably adjusted in the preparation process as explained in Japanese Patent Application No. 10-157107. Usage of the ramp wave in the preparation process makes the adjustment of the wall voltage easy. When plural minute discharges occur continuously or continuous discharges occur by applying the ramp wave voltage, the sum of the applied voltage and the wall voltage during discharge is maintained at the value almost equal to the discharge starting voltage. Therefore, the difference between the discharge starting voltage and the peak voltage (pulse amplitude) of the ramp wave becomes the wall voltage after the ramp wave is applied. Compared with a rectangular wave, the ramp wave has less quantity of light emission. It is also advantageous in reducing the background intensity.

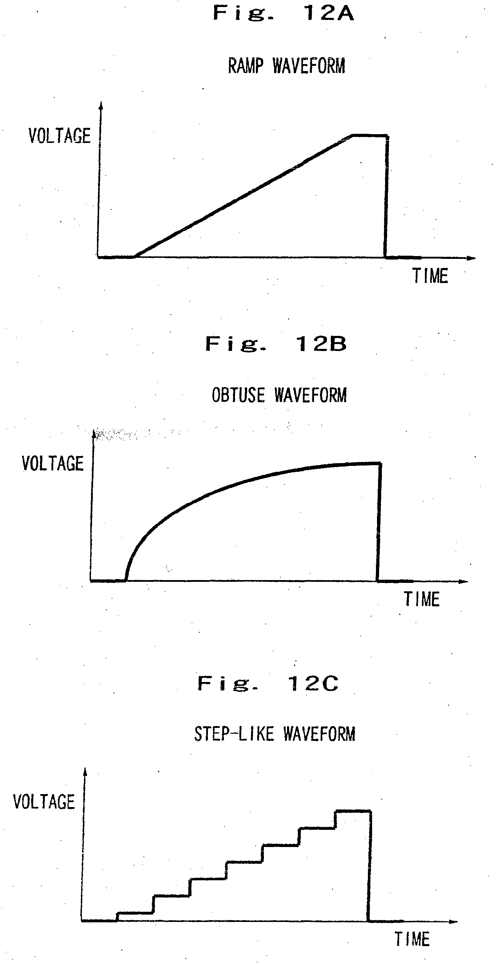

The voltage waveform used for the preparation process is not limited to a ramp wave. Only the requirement is that the voltage between the electrodes increases simply from the first set value to the second set value, while plural minute discharges can occur continuously or continuous discharges can occur. For example, the ramp waveform can be replaced with an obtuse waveform or a step-like waveform shown in Fig. 12. Alternatively, the voltage waveform may be a combination of plural waveforms selected from the ramp waveform, the obtuse waveform and the step-like waveform.

An example of the applied voltages is explained as follows. The discharge starting voltage of the electrode gap XY is 220 volts, the discharge starting voltage of the electrode gap AY is 170 volts. Hereinafter, concerning the polarity of the applied voltage and the wall voltage, the X side is regarded as positive in the electrode gap XY, while the A side is regarded as positive in the electrode gap AY.

In the preparation period TR, the widths of the pulses Pra1, Prx1 and Pry1 is 70 *µ* s, the rate of potential change of the electrode gap XY is - 4.2V/ *µ* s and the final voltage thereof is - 300V, the ratio of voltage change of the electrode gap AY is -2.8V / *µ* s and the final voltage thereof is -200V. The wall voltage at the end of the pulse application is 80V for the electrode gap XY and 30V for the electrode gap AY. The widths of the pulses Pra2, Prx2 and Pry2 are 25 *µ* s, the rate of potential change of the electrode gap XY is 6.8V/µs and the final voltage is 170V.

The rate of potential change of the electrode gap AY is 6. 8V/ µs and the final voltage is 170V. The wall voltage at the end of the pulse application is 50V for the electrode gap XY and 0V for the electrode gap AY.

In the address period TA, the address electrode potential of the strong addressing discharge is 80V, the address electrode potential of the weak addressing discharge is 0V, and the potential of the main electrode X is 80V. The potential of the main electrode Y when the scanning pulse is applied is -140V, while the potential of the main electrode Y when the scanning pulse is not applied is 0V. The wall voltage of the electrode gap XY at the end of the strong addressing discharge is -120V, while the wall voltage of the electrode gap XY at the end of the weak addressing discharge is 0V.

In the sustain period TS, the amplitude of the sustain pulse Ps is 170V, and the address electrode potential is 85V. In this case, the minimum value of the wall voltage for generating the sustaining discharge is 70V.

In the conventional technique, addressing of a row needs 3*µ s*. However, in this example, since the addressing discharge in the upstream side of row selection contributes to the priming in the downstream, the address pulse Pa having the pulse width of 1 *µ s* enables stable addressing.

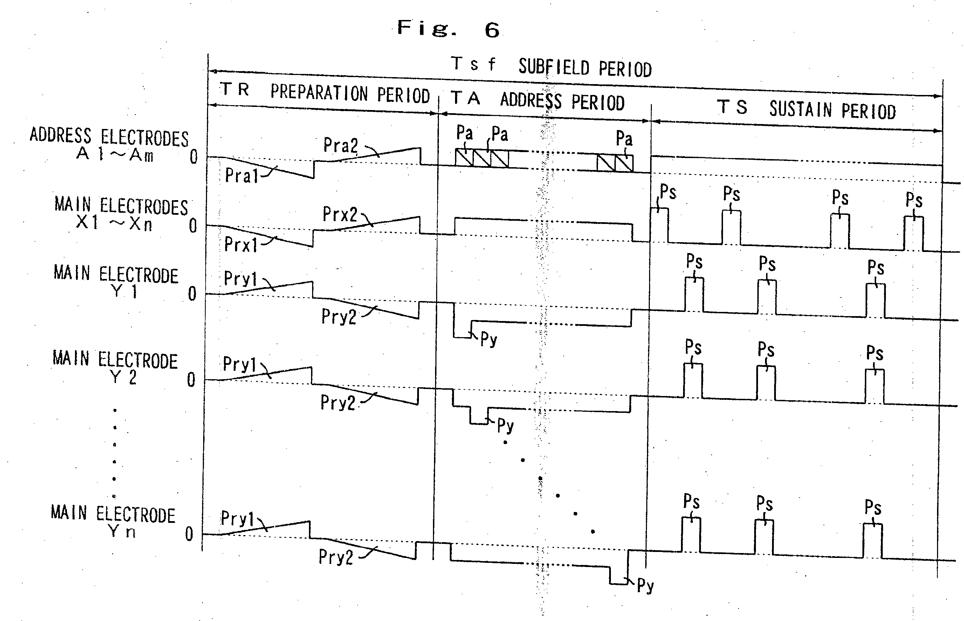

Fig. 6 is a diagram of the voltage waveform showing a second example of the drive sequence. This example is an erasing address format, in which the strong discharge occurs in the non-selected cell.

In the preparation period TR. the pulse having the ramp waveform is applied in the same way as the example shown in Fig. 5, so that the wall voltage of the electrode gap XY is controlled to the target value of the preparation process.

In the address period TR, a weak addressing discharge is generated in the selected cell when applying the scanning pulse. The intensity of discharge is set to the value such that the wall voltage of the electrode gap XY after addressing discharge remains within the lighting range. In the non-selected cell, a strong addressing discharge is generated when applying the scanning pulse, so that the wall voltage of the electrode gap XY is changed to a value within the non-lighting range. The intensity of the discharge when applying the scanning pulse is controlled by the potential of the address electrode in the same way as the example shown in Fig. 5.

The wall voltage of the electrode gap XY at the end of the preparation period is set to Vw2 (X side is positive), and the minimum value of the wall voltage of the electrode gap XY for the cell to be lightened in the sustain period TS is set to V_{TH} (absolute value). For the selected cell, the wall voltage of the electrode gap XY is changed by the weak addressing discharge in the range from Vw2 to Vth or more. For the non-selected cell, the wall voltage of the electrode gap XY is changed by the strong addressing discharge to a value higher than - V_{TH} and lower than V_{TH} (preferably zero or a value nearly equal to zero).

An example of the applied voltages is explained as follows. The discharge starting voltage of the electrode gap XY is 220 volts, the discharge starting voltage of the electrode gap AY is 170 volts. Hereinafter, concerning the polarity of the applied voltage and the wall voltage, the X side is regarded as positive in the electrode gap XY, while the A side is regarded as positive in the electrode gap AY.

In the preparation period TR, the widths of the pulses Pra1, Prx1 and Pry1 are 70 *µ s*, the rate of potential change of the electrode gap XY is -6.0V/ *µ s* and the final voltage thereof is -420V, the ratio of voltage change of the electrode gap AY is -3.6V/µs and the final voltage thereof is -250V. The wall voltage at the end of the pulse application is 170V for the electrode gap XY and 80V for the electrode gap AY. The widths of the pulses Pra2, Prx2 and Pry2 are 25 *µ* s, the rate of potential change of the electrode gap XY is 2. 0V/ /*µ* s and the final voltage is 50V. The rate of potential change of the electrode gap AY is 5. 2V/*µ* s and the final voltage is 130V. The wall voltage at the end of the preparation period is 170V for the electrode gap XY and 40V for the electrode gap AY.

In the address period TA, the address electrode potential of the strong addressing discharge is 40V, the address electrode potential of the weak addressing discharge is 0V, and the potential of the main electrode X is 0V. The potential of the main electrode Y when the scanning pulse is applied is -100V, while the potential of the main electrode Y when the scanning pulse is not applied is 0V. The wall voltage of the electrode gap XY at the end of the weak addressing discharge is 120V, while the wall voltage of the electrode gap XY at the end of the strong addressing discharge is 0V.

In the sustain period TS, the amplitude of the sustain pulse Ps is 170V, and the address electrode potential is 85V. In this case, the minimum value of the wall voltage for generating the sustaining discharge is 70V.

In this example too, since the addressing discharge at the upstream side of the row selection contributes to the priming in the downstream, the address pulse Pa having the pulse width of 1 *µ* s enables stable addressing.

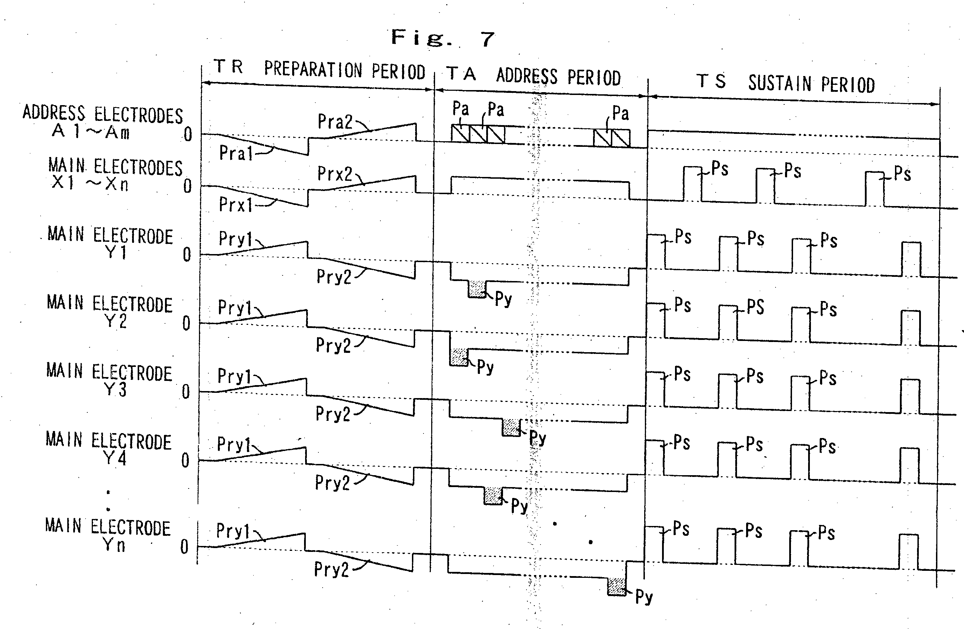

Fig. 7 is a diagram of the voltage waveform showing a third example of the drive sequence.

In the addressing, the row selection is not required to perform in the arrangement order. Namely, it is only required that the space charge supplied by the addressing discharge in a certain row is within a distance range that can contribute to the priming effect for the later addressing discharge. In Fig. 7, even rows and odd rows are selected alternately, and the each group of even or odd rows is scanned by the arrangement order from the upper to the lower. When switching from the odd row to the even row, the row selection is performed by skipping two rows. Sufficient priming effect was obtained by the row selection with skipping two rows in the 25 inches and SXGA screen.

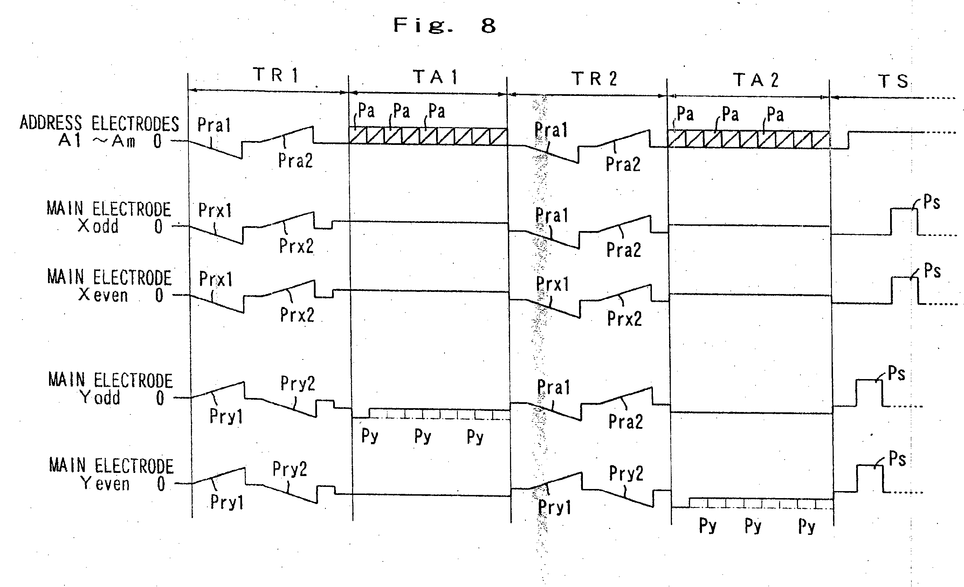

Fig. 8 is a diagram of the voltage waveform showing according to the embodiment of the invention the drive sequence.

The rows constituting the screen are divided into the group of odd rows and the group of even rows. The preparation periods TR1, TR2 and the address periods TA1, TA2 are assigned to each group. The sustain period TS is common to both groups.

Dividing the address process into two, the potential of the main electrode X of the selected row can be different from the potential of the main electrode X of the non-selected row that is adjacent to the selected row, so that the propagation of the space charge generated by the addressing discharge along the row direction is controlled.

The second preparation period TR2 is provided for the following purposes. One purpose is to readjust the potential of the even rows since the state of the wall charge of the even rows is disturbed a little by the addressing discharge of the odd rows (the first address process). Another purpose is to supply the priming particle to the addressing discharge of the head of the even row (the second address process).

In the preparation period TR2, only the charges of the even rows are controlled without disturbing the state of the wall charge of the odd rows. For this reason, the pulse applied to the even rows in the preparation period TR2 is the same as the first preparation period TR1, while the pulse applied to the main electrodes X, Y of the odd rows in the preparation period TR2 is the same as the pulses Pra1 and Pra2 applied to the address electrodes A1-Am. Thus, the applied voltage of the electrode gap AY and the electrode gap XY within the cell of the odd rows in the preparation period TR2 becomes zero, so that the state of the wall charge cannot be disturbed.

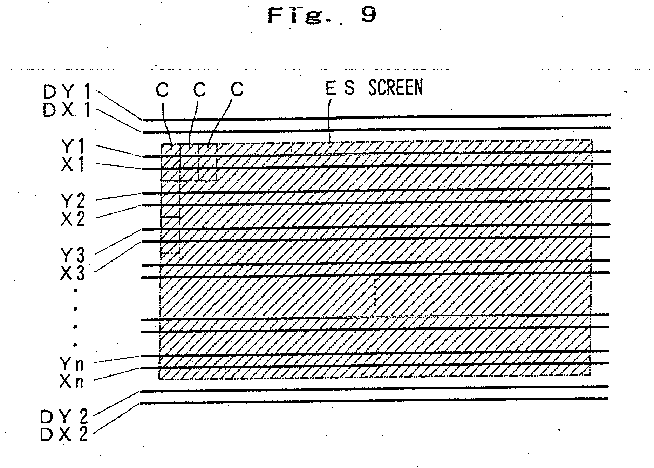

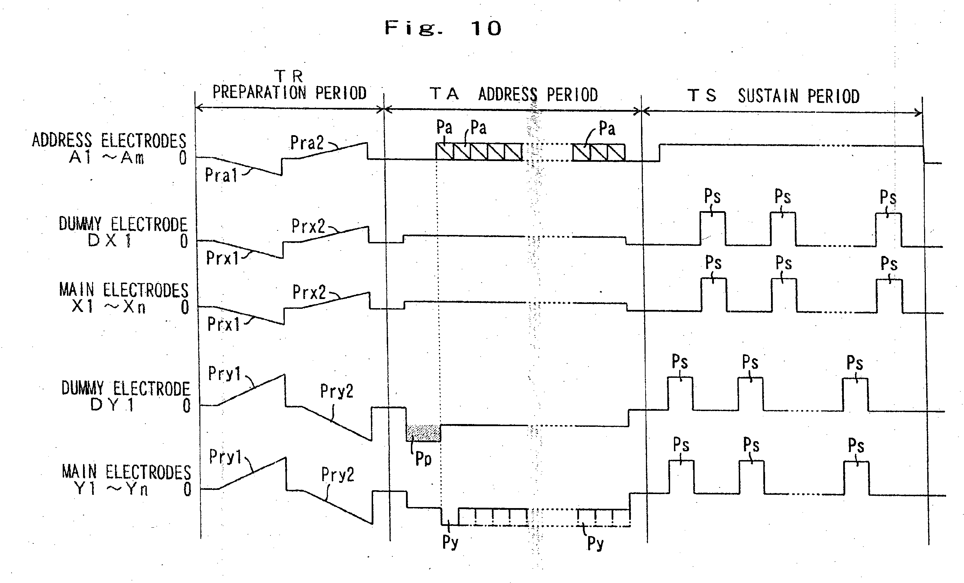

Fig. 9 is a schematic drawing of the main electrode arrangement of another example. Fig. 10 shows voltage waveforms of a fifth example of the drive sequence.

In the above-mentioned first to fourth examples, supply of the priming particle to the first addressing discharge in the subfield is performed by the discharge in the preparation process. In order to ensure the supply of the priming particle, it is more effective to generate the priming discharge after the preparation process and before starting the addressing. For example, the outside of the screen ES in the row direction is provided with an auxiliary main electrode (an electrode for priming) that is similar to the main electrodes X, Y so as to generate priming discharge by the auxiliary main electrode. In the example shown in Fig. 9, the auxiliary main electrodes DY1, DX1 are disposed at the outside of the main electrodes Y1, X1 of the first row, and the auxiliary main electrodes DY2, DX2 are disposed at the outside of the main electrodes Yn, Xn of the final row. As shown in Fig. 10, the pulse Pp is applied to the auxiliary main electrode DY1 so as to generate the priming, then the scanning is started from the main electrode Y1 that is closest to the auxiliary main electrode DY1 in the screen. Though the peak value of the pulse Pp is the same as the scanning pulse Py, the pulse width is set longer than the scanning pulse P so as to increase the discharge probability. The arrangement of the pair of auxiliary main electrodes makes the pairs of main electrodes at the first and final rows adjacent to the main electrodes at both sides in the same way as the other pair of main electrodes. Therefore, the discharge condition is uniformed and the display quality is increased.

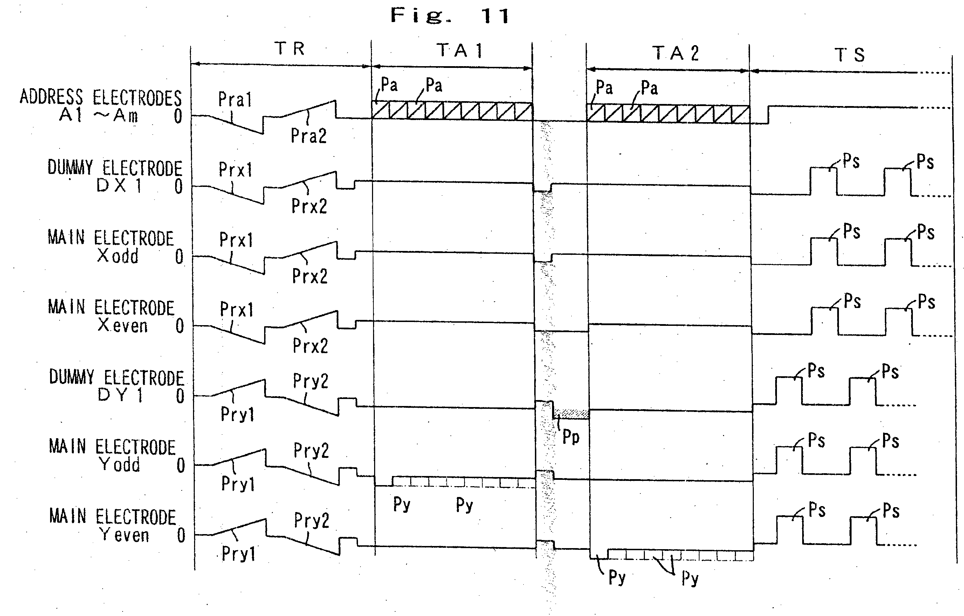

Fig. 11 is a diagram of the voltage waveform showing a sixth example of the drive sequence.

In the above-mentioned fourth example, the second preparation period TR2 is provided. However, the second preparation period TR2 can be eliminated when the disturbance of the charge state of the even rows by the address process of the odd rows is sufficiently small. It is preferable that in order to supply the priming particle to the first addressing discharge of the latter half of the address process, the pair of auxiliary main electrodes may be used so as to generate the priming discharge before the latter half of the address process. The priming discharge can be generated just before the address process of the odd row.

When the addressing is performed independently for the odd rows and for even rows as explained in the fourth and sixth examples, the main electrodes X of the odd rows can be common and controlled by the first driver, while the main electrodes X of the even rows can be common and controlled by the second driver.

In the above-mentioned embodiments, the target to be driven is the plasma display panel 1 having structure in which the main electrodes X, Y and the address electrode A are covered with the dielectric material. However, the present invention can be also applied to the structure in which either electrode making up a pair is covered with the dielectric material. For example, even in the structure that has no dielectric material for covering the address electrode A, or the structure in which one of the main electrodes X, Y is exposed to the discharge space 30, the sufficient wall voltage can be generated in the electrode gaps XY, AY. The polarity, the value, the application time and the rate of rising change of the applied voltage are not limited to the examples. The the present invention can be applied not only to display devices including the plasma display panel, PALC, but also to gas-discharge devices having other structure without utilizing the memory function by the wall charge. The gas-discharge is not necessarily required to be for display.

## Claims

1. A method of driving a gas discharge panel (1), the panel (1) having a plurality of pairs of main electrodes (X, Y), each pair of main electrodes (X, Y) corresponding to a row of the panel (1) and one of the electrodes of each pair being a scanning electrode (Y) that is selectable independently of the scanning electrodes (Y) of other pairs in a line-sequential addressing operation, and the panel (1) also having a plurality of address electrodes (A1~Am) corresponding respectively to columns of the panel (1), and a plurality of cells (C) arranged at respective intersections of the pairs of main electrodes (X, Y) and the address electrodes (A1~Am), the method comprising:
in an addressing preparation period (TR) of a driving period (Tsf) of the panel (1), applying an addressing preparation pulse (Prx2, Pry2) to at least the scanning electrode (Y) of each pair of main electrodes (X, Y) so that a potential difference between the main electrodes (X, Y) of each pair increases with time from a first set value to a second set value;
in an addressing period (TA) of said driving period (Tsf), which follows said addressing preparation period (TR), selecting the scanning electrodes (Y) one after another in a scanning sequence and applying a scanning pulse (Py) to the selected scanning electrode (Y) and address pulses (Pa) to the address electrodes (A1~Am) so as to set each of the cells (C) of the row corresponding to the selected scanning electrode (Y) selectively into either a to-be-lit state or a not-to-be-lit state in accordance with state setting data (Dsf) corresponding to the row concerned; and
in a sustain period (TS) of said driving period (Tsf), which follows said addressing period (TA), generating discharges in cells (C) that have been set into said to-be-lit state in said addressing period (TA);
wherein said driving period (Tsf) includes first and second such addressing periods (TA1, TA2), a first plurality of the scanning electrodes (Y_{odd}) being selected one after another in said first addressing period (TA1), and a second plurality of the scanning electrodes (Yₑᵥₑₙ), alternating with the first plurality, being selected one after another in said second addressing period (TA2);
**characterised in that** the driving period (Tsf) further includes, as said addressing preparation period (TR), a first preparation period (TR1) before the beginning of the first addressing period (TA1), and a second preparation period (TR2), after the end of the first addressing period (TA1) and before the beginning of the second addressing period (TA2),
wherein the method comprises applying, before the first addressing period (TA1) of the first preparation period (TR1), a first addressing preparation pulse (Pry2 in TR1), as the addressing preparation pulse (Prx2, Pry2), to the first plurality of the scanning electrodes (Y_{odd}) to be selected in a scanning sequence of said first addressing period (TA1), and
applying, before the second addressing period (TA2) of the second address preparation period (TR2), a second preparation pulse (Pry2 in TR2), as the addressing preparation pulse (Prx2, Pry2), to the second plurality of the scanning electrodes (Yₑᵥₑₙ) to be selected in the scanning sequence of said second addressing period (TA2), and
wherein the pulse applied to the even rows comprising the second plurality of the scanning electrodes in the second preparation period (TR2) is the same as in the first preparation period, and the pulse applied to the odd rows comprising the first plurality of the scanning electrodes in the second preparation period (TR2) is the same as pulses (Pra1, Pra2) applied to the address electrodes (A1-Am).

2. A method as claimed in claim 1, wherein said second preparation pulse (Pry2 in TR2) has the same waveform as that of the first preparation pulse (Pry2 in TR1) and is applied to at least the second plurality of scanning electrodes (Yₑᵥₑₙ) so as to readjust the charges of cells (C) in rows corresponding to the second plurality of scanning electrodes (Yₑᵥₑₙ) following said first addressing period (TA1).

3. A method as claimed in claim 1, wherein, between said first and second addressing periods (TA1, TA2), the pulse (Pra1, Pra2) applyied to each scanning electrode of said first plurality of scanning electrodes (Y_{odd}) is different from the pulse (Pry1, Pry2) applied to each scanning electrode of the second plurality of scanning electrodes (Yₑᵥₑₙ).

4. A method as claimed in claim 1, wherein said first plurality of scanning electrodes (Y_{odd}) correspond respectively to odd rows of the panel (1) and said second plurality of scanning electrodes (Yₑᵥₑₙ) correspond respectively to even rows of said panel (1).

5. A method as claimed in claim 1, wherein both the first preparation pulse (Pry2 in TR1) and the second preparation pulse (Pry2 in TR2) applied to the second plurality of scanning electrodes (Yₑᵥₑₙ) have a ramp waveform.

6. A display device comprising:
a gas discharge panel (1) having a plurality of pairs of main electrodes (X, Y), each pair of main electrodes (X, Y) corresponding to a row of the panel (1) and one of the electrodes of each pair being a scanning electrode (Y) that is selectable independently of the scanning electrodes (Y) of other pairs in a line-sequential addressing operation, and the panel (1) also having a plurality of address electrodes (A1~Am) corresponding respectively to columns of the panel (1), and a plurality of cells (C) arranged at respective intersections of the pairs of main electrodes (X, Y); and
a drive circuit (85, 86, 89) comprising:
• means operable, in an addressing preparation period (TR) of a driving period (Tsf) of the panel (1), to apply an addressing preparation pulse (Prx2, Pry2) to at least the scanning electrode (Y) of each pair of main electrodes (X, Y) so that a potential difference between the main electrodes (X, Y) of each pair increases with time from a first set value to a second set value;
• means operable, in an addressing period (TA) of said driving period (Tsf), which follows said addressing preparation period (TR), to select the scanning electrodes (Y) one after another in a scanning sequence and to apply a scanning pulse (Py) to the selected scanning electrode (Y) and address pulses (Pa) to the address electrodes (A1~Am) so as to set each of the cells (C) of the row corresponding to the selected scanning electrode (Y) selectively into either a to-be-lit state or a not-to-be-lit state in accordance with state setting data (Dsf) corresponding to the row concerned; and
• means operable, in a sustain period (TS) of said driving period (Tsf), which follows said addressing period (TA), to generate discharges in cells (C) that have been set into said to-be-lit state in said addressing period (TA);
wherein said driving period (Tsf) includes first and second such addressing periods (TA1, TA2), the said selecting means being operable to select a first plurality of the scanning electrodes (Y_{odd}) one after another in said first addressing period (TA1), and to select a second plurality of the scanning electrodes (Yₑᵥₑₙ), alternating with the first plurality, one after another in said second addressing period (TA2); and
**characterised in that** the driving period (Tsf) further includes, as said addressing preparation period (TR), a first preparation period (TR1) before the beginning of the first addressing period (TA1), and a second preparation period (TR2), after the end of the first addressing period (TA1) and before the beginning of the second addressing period (TA2),
wherein the drive circuit comprises means operable to apply, before the first addressing period (TA1) of the first preparation period (TR1), a first addressing preparation pulse (Pry2 in TR1), as the addressing preparation pulse (Prx2, Pry2), to the first plurality of the scanning electrodes (Y_{odd}) to be selected in a scanning sequence of said first addressing period (TA1), and
applying, before the second addressing period (TA2) of the second address preparation period (TR2), a second preparation pulse (Pry2 in TR2), as the addressing preparation pulse (Prx2, Pry2), to the second plurality of the scanning electrodes (Yₑᵥₑₙ) to be selected in the scanning sequence of the second addressing period (TA2), and
wherein the pulse applied to the even rows comprising the second plurality of the scanning electrodes in the second preparation period (TR2) is the same as in the first preparation period, and the pulse applied to the odd rows comprising the first plurality of the scanning electrodes in the second preparation period (TR2) is the same as pulses (Pra1, Pra2) applied to the address electrodes (A1-Am).

## Patentansprüche

1. Verfahren zum Ansteuern eines Gasentladungspanels (1), das eine Vielzahl von Paaren von Hauptelektroden (X, Y) aufweist, deren jedes einer Zeile des Panels (1) entspricht, wobei eine der Elektroden jedes Paares eine Abtastelektrode (Y) ist, die unabhängig von den Abtastelektroden (Y) anderer Paare in einem zeilen-sequentiellen Adressiervorgang anwählbar ist, wobei das Panel (1) ferner eine Vielzahl von jeweils Spalten des Panels (1) entsprechenden Adressierelektroden (A1~Am) und eine Vielzahl von jeweils an Kreuzungen der Paare von Hauptelektroden (X, Y) mit den Adressierelektroden (A1~Am) angeordneten Zellen (C) aufweist, wobei in dem Verfahren:
in einer Adressiervorbereitungsperiode (TR) einer Ansteuerperiode (Tsf) des Panels (1) an mindestens die Abtastelektrode (Y) jedes Paares von Hauptelektroden (X, Y) ein Adressiervorbereitungsimpuls (Prx2, Pry2) angelegt wird, so dass die Potentialdifferenz zwischen den Hauptelektroden (X, Y) jedes Paares mit der Zeit von einem ersten Vorgabewert auf eine zweiten Vorgabewert ansteigt,
in einer auf die Adressiervorbereitungsperiode (TR) folgenden Adressierperiode (TA) der Ansteuerperiode (Tsf) die Abtastelektroden (Y) in einer Abtastsequenz nacheinander angewählt werden und an die angewählte Abtastelektrode (Y) ein Abtastimpuls (Py) und an die Adressierelektroden (A1~Am) Adressierimpulse (Pa) angelegt werden, um jede der Zellen (C) der der angewählten Abtastelektrode (Y) entsprechenden Zeile gemäß der betreffenden Zeile entsprechenden Zustandsschaltdaten (Dsf) selektiv in entweder einen zu beleuchtenden Zustand oder einen nicht zu beleuchtenden Zustand zu schalten, und
in einer auf die Adressierperiode (TA) folgenden Aufrechterhaltungsperiode (TS) der Ansteuerperiode (Tsf) in Zellen (C), die in der Adressierperiode (TA) in den zu beleuchtenden Zustand geschaltet worden sind, Entladungen erzeugt werden,
wobei die Ansteuerperiode (Tsf) eine erste und eine zweite Adressierperiode (TA1, TA2) umfasst, in der ersten Adressierperiode (TA1) eine erste Vielzahl der Abtastelektroden (Y_{odd}) nacheinander angewählt wird und in der zweiten Adressierperiode (TA2) eine zweite Vielzahl der Abtastelektroden (Y_{odd}) nacheinander angewählt wird,
**dadurch gekennzeichnet, dass** die Ansteuerperiode (Tsf) ferner als Adressiervorbereitungsperiode (TR) eine erste Vorbereitungsperiode (TR1) vor Beginn der ersten Adressierperiode (TA1) und eine zweite Vorbereitungsperiode (TR2) nach dem Ende der ersten Adressierperiode (TA1) und vor Beginn der zweiten Adressierperiode (TA2) aufweist,
wobei in dem Verfahren vor der ersten Adressierperiode (TA1) der ersten Adressiervorbereitungsperiode (TR1) ein erster Adressiervorbereitungsimpuls (Pry2 in TR1) als Adressiervorbereitungsimpuls (Prx2, Pry2) an die in einer Abtastsequenz der ersten Adressierperiode (TA1) anzuwählende erste Vielzahl der Abtastelektroden (Y_{odd}) angelegt wird, und
vor der zweiten Adressierperiode (TA2) der zweiten Adressiervorbereitungsperiode (TR2) ein zweiter Vorbereitungsimpuls (Pry2 in Tr2) als Adressiervorbereitungsimpuls (Prx2, Pry2) an die in der Abtastsequenz der zweiten Adressierperiode (TA2) anzuwählende zweite Vielzahl der Abtastelektroden (Yₑᵥₑₙ) angelegt wird, und
wobei der Impuls, der in der zweiten Vorbereitungsperiode (TR2) an die die zweite Vielzahl der Abtastelektroden enthaltenden geraden Zeilen angelegt wird, der gleiche ist wie in der ersten Vorbereitungsperiode und der Impuls, der in der zweiten Vorbereitungsperiode (TR2) an die die erste Vielzahl der Abtastelektroden enthaltenden ungeraden Zeilen angelegt wird, der gleiche ist wie die an die Adressierelektroden (A1~Am) angelegten Impulse (Pra1, Pra2).

2. Verfahren nach Anspruch 1, wobei der zweite Vorbereitungsimpuls (Pry2 in Tr2) die gleiche Impulsform hat wie der erste Vorbereitungsimpuls (Pry2 in Tr1) und an mindestens die zweite Vielzahl der Abtastelektroden (Yₑᵥₑₙ) angelegt wird, um die Ladungen von Zellen (C) in der zweiten Vielzahl der Abtastelektroden (Yₑᵥₑₙ) entsprechenden Zeilen im Anschluss an die erste Adressierperiode (TA1) wieder einzustellen.

3. Verfahren nach Anspruch 1, wobei der zwischen der ersten und der zweiten Adressierperiode (TA1, TA2) der an jede Abtastelektrode der ersten Vielzahl der Abtastelektroden (Y_{odd}) angelegte Impuls (Pra1, Pra2) von dem an jede Abtastelektrode der zweiten Vielzahl der Abtastelektroden (Yₑᵥₑₙ) angelegten Impuls (Pry1, Pry2) verschieden ist.

4. Verfahren nach Anspruch 1, wobei die erste Vielzahl der Abtastelektroden (Y_{odd}) jeweils ungeraden Zeilen des Panels (1) und die zweite Vielzahl der Abtastelektroden (Yₑᵥₑₙ) jeweils geraden Zeilen des Panels (1) entspricht.

5. Verfahren nach Anspruch 1, wobei sowohl der erste Vorbereitungsimpuls (Pry2 in Tr1) als auch der zweite Vorbereitungsimpuls (Pry2 in Tr2), die an die zweite Vielzahl von Abtastelektroden (Yₑᵥₑₙ) angelegt werden, Rampenimpulsform haben.

6. Anzeigegerät mit:
einem Gasentladungspanel (1), das eine Vielzahl von Paaren von Hauptelektroden (X, Y) aufweist, deren jedes einer Zeile des Panels (1) entspricht, wobei eine der Elektroden jedes Paares eine Abtastelektrode (Y) ist, die unabhängig von den Abtastelektroden (Y) anderer Paare in einem zeilen-sequentiellen Adressiervorgang anwählbar ist, wobei das Panel (1) ferner eine Vielzahl von jeweils Spalten des Panels (1) entsprechenden Adressierelektroden (A1~Am) und eine Vielzahl von jeweils an Kreuzungen der Paare von Hauptelektroden (X, Y) angeordneten Zellen (C) aufweist, und
einer Ansteuerschaltung (85, 86, 89) mit:
• einer Einrichtung, die so betätigbar ist, dass sie in einer Adressiervorbereitungsperiode (TR) einer Ansteuerperiode (Tsf) des Panels (1) an mindestens die Abtastelektrode (Y) jedes Paares von Hauptelektroden (X, Y) einen Adressiervorbereitungsimpuls (Prx2, Pry2) anlegt, so dass die Potentialdifferenz zwischen den Hauptelektroden (X, Y) jedes Paares mit der Zeit von einem ersten Vorgabewert auf eine zweiten Vorgabewert ansteigt,
• einer Einrichtung, die so betätigbar ist, dass sie in einer auf die Adressiervorbereitungsperiode (TR) folgenden Adressierperiode (TA) der Ansteuerperiode (Tsf) die Abtastelektroden (Y) in einer Abtastsequenz nacheinander anwählt, und an die angewählte Abtastelektrode (Y) ein Abtastimpuls (Py) und an die Adressierelektroden (A1~Am) Adressierimpulse (Pa) anlegt, um jede der Zellen (C) der der angewählten Abtastelektrode (Y) entsprechenden Zeile gemäß der betreffenden Zeile entsprechenden Zustandsschaltdaten (Dsf) selektiv in entweder einen zu beleuchtenden Zustand oder einen nicht zu beleuchtenden Zustand zu schalten, und
• einer Einrichtung, die so betätigbar ist, dass sie in einer auf die Adressierperiode (TA) folgenden Aufrechterhaltungsperiode (TS) der Ansteuerperiode (Tsf) in Zellen (C), die in der Adressierperiode (TA) in den zu beleuchtenden Zustand geschaltet worden sind, Entladungen erzeugt,
wobei die Ansteuerperiode (Tsf) eine erste und eine zweite Adressierperiode (TA1, TA2) umfasst und die Anwähleinrichtung so betätigbar ist, dass sie in der ersten Adressierperiode (TA1) eine erste Vielzahl der Abtastelektroden (Y_{odd}) nacheinander gewählt und in der zweiten Adressierperiode (TA2) eine zweite Vielzahl der Abtastelektroden (Y_{odd}) nacheinander anwählt,
**dadurch gekennzeichnet, dass** die Ansteuerperiode (Tsf) ferner als Adressiervorbereitungsperiode (TR) eine erste Vorbereitungsperiode (TR1) vor Beginn der ersten Adressierperiode (TA1) und eine zweite Vorbereitungsperiode (TR2) nach dem Ende der ersten Adressierperiode (TA1) und vor Beginn der zweiten Adressierperiode (TA2) aufweist,
wobei die Ansteuerschaltung eine Einrichtung aufweist, die so betätigbar ist, dass sie vor der ersten Adressierperiode (TA1) der ersten Adressiervorbereitungsperiode (TR1) als Adressiervorbereitungsimpuls (Prx2, Pry2) einen ersten Adressiervorbereitungsimpuls (Pry2 in TR1) an die in einer Abtastsequenz der ersten Adressierperiode (TA1) anzuwählende erste Vielzahl der Abtastelektroden (Y_{odd}) anlegt, und
vor der zweiten Adressierperiode (TA2) der zweiten Adressiervorbereitungsperiode (TR2) einen zweiten Vorbereitungsimpuls (Pry2 in Tr2) als Adressiervorbereitungsimpuls (Prx2, Pry2) an die in der Abtastsequenz der zweiten Adressierperiode (TA2) anzuwählende zweite Vielzahl der Abtastelektroden (Yₑᵥₑₙ) anlegt, und
wobei der Impuls, der in der zweiten Vorbereitungsperiode (TR2) an die die zweite Vielzahl der Abtastelektroden enthaltenden geraden Zeilen angelegt wird, der gleiche ist wie in der ersten Vorbereitungsperiode und der Impuls, der in der zweiten Vorbereitungsperiode (TR2) an die die erste Vielzahl der Abtastelektroden enthaltenden ungeraden Zeilen angelegt wird, der gleiche ist wie die an die Adressierelektroden (A1~Am) angelegten Impulse (Pra1, Pra2).

## Revendications

1. Procédé de commande d'un panneau à décharge de gaz (1), le panneau (1) comportant une pluralité de paires d'électrodes principales (X, Y), chaque paire d'électrodes principales (X, Y) correspondant à une rangée du panneau (1), et l'une des électrodes de chaque paire étant une électrode de balayage (Y) pouvant être sélectionnée indépendamment des électrodes de balayage (Y) des autres paires dans une opération d'adressage séquentiel en ligne, et le panneau (1) comportant également une pluralité d'électrodes d'adresse (A1~Am) correspondant respectivement à des colonnes du panneau (1), et une pluralité de cellules (C) disposées aux intersections respectives des paires d'électrodes principales (X, Y) et des électrodes d'adresse (A1~Am), le procédé comportant :
dans une période de préparation d'adressage (TR) d'une période d'entraînement (Tsf) du panneau (1), l'application d'une impulsion de préparation d'adressage (Prx2, Pry2) à au moins l'électrode de balayage (Y) de chaque paire d'électrodes principales (X, Y) de telle sorte qu'une différence de potentiel entre les électrodes principales (X, Y) de chaque paire augmente au fil du temps d'une première valeur de consigne à une deuxième valeur de consigne;
dans une période d'adressage (TA) de ladite période d'entraînement (Tsf), qui fait suite à ladite période de préparation d'adressage (TR), la sélection des électrodes de balayage (Y) l'une après l'autre dans une séquence de balayage et l'application d'une impulsion de balayage (Py) à l'électrode de balayage sélectionnée (Y) et d'impulsions d'adresse (Pa) aux électrodes d'adresse (A1~Am) de manière à définir chacune des cellules (C) de la rangée correspondant à l'électrode de balayage sélectionnée (Y) de manière sélective soit dans un état à éclairer soit dans un état à ne pas éclairer conformément aux données d'établissement d'état (Dsf) correspondant à la rangée concernée, et
dans une période d'entretien (TS) de ladite période d'entraînement (Tsf), qui fait suite à ladite période d'adressage (TA), la génération de décharges dans des cellules (C) qui ont été définies dans ledit état à éclairer pendant ladite période d'adressage (TA),
dans lequel ladite période d'entraînement (Tsf) comprend une première et une seconde périodes d'adressage (TA1, TA2), une première pluralité des électrodes de balayage (Yᵢₘₚₐᵢᵣₑ) étant sélectionnées l'une après l'autre dans ladite première période d'adressage (TA1), et une seconde pluralité des électrodes de balayage (Yₚₐᵢᵣₑ), qui alterne avec la première pluralité, étant sélectionnées l'une après l'autre dans ladite seconde période d'adressage (TA2), **caractérisé en ce que**
la période d'entraînement (Tsf) inclut en outre, en tant que ladite période de préparation d'adressage (TR), une première période de préparation (TR1) avant le début de la première période d'adressage (TA1), et une seconde période de préparation (TR2), après la fin de la première période d'adressage (TA1) et avant le début de la seconde période d'adressage (TA2),
dans lequel le procédé comporte d'appliquer, avant la première période d'adressage (TA1) de la première période de préparation (TR1), une première impulsion de préparation d'adressage (Pry2 en TR1), en tant qu'impulsion de préparation d'adressage (Prx2, Pry2), à la première pluralité d'électrodes de balayage (Yᵢₘₚₐᵢᵣₑ) à sélectionner dans une séquence de balayage de ladite première période d'adressage (TA1), et
d'appliquer, avant la seconde période d'adressage (TA2) de la seconde période de préparation d'adresse (TR2), une seconde impulsion de préparation (Pry2 en TR2), en tant qu'impulsion de préparation d'adressage (Prx2, Pry2), à la seconde pluralité d'électrodes de balayage (Yₚₐᵢᵣₑ) à sélectionner dans la séquence de balayage de ladite seconde période d'adressage (TA2), et
dans lequel l'impulsion appliquée aux rangées paires comportant la seconde pluralité des électrodes de balayage dans la seconde période de préparation (TR2) est la même que dans la première période de préparation, et l'impulsion appliquée aux rangées impaires comportant la première pluralité des électrodes de balayage dans la seconde période de préparation (TR2) est la même que des impulsions (Pra1, Pra2) appliquées aux électrodes d'adresses ((A1~Am).

2. Procédé selon la revendication 1, dans lequel ladite seconde impulsion de préparation (Pry en TR2) a la même forme d'onde que celle de la première impulsion de préparation (Pry2 en TR1) et est appliquée à au moins la seconde pluralité d'électrodes de balayage (Yₚₐᵢᵣₑ) de manière à réajuster les charges de cellules (C) dans des rangées correspondant à la seconde pluralité d'électrodes de balayage (Yₚₐᵢᵣₑ) suivant ladite première période d'adressage (TA1).

3. Procédé selon la revendication 1, dans lequel, entre lesdites première et seconde périodes d'adressage (TA1, TA2), l'impulsion (Pra1, Pra2) appliquée à chaque électrode de balayage de ladite pluralité d'électrodes de balayage (Yᵢₘₚₐᵢᵣₑ) est différente de l'impulsion (Pry1, Pry2) appliquée à chaque électrode de balayage de la seconde pluralité d'électrodes de balayage (Yₚₐᵢᵣₑ).

4. Procédé selon la revendication 1, dans lequel ladite première pluralité d'électrodes de balayage (Yᵢₘₚₐᵢᵣₑ) correspond respectivement à des rangées impaires du panneau (1) et ladite seconde pluralité d'électrodes de balayage (Yₚₐᵢᵣₑ) correspond respectivement à des rangées paires dudit panneau (1).

5. Procédé selon la revendication 1, dans lequel à la fois la première impulsion de préparation (Pry2 en TR1) et la seconde impulsion de préparation (Pry en TR2) appliquées à la seconde pluralité d'électrodes de balayage (Yₚₐᵢᵣₑ) ont une forme d'onde en rampe.

6. Dispositif d'affichage comportant :
un panneau à décharge de gaz (1) comportant une pluralité de paires d'électrodes principales (X, Y), chaque paire d'électrodes principales (X, Y) correspondant à une rangée du panneau (1), et l'une des électrodes de chaque paire étant une électrode de balayage (Y) pouvant être sélectionnée indépendamment des électrodes de balayage (Y) des autres paires dans une opération d'adressage séquentiel en ligne, et le panneau (1) comportant également une pluralité d'électrodes d'adresse (A1~Am) correspondant respectivement à des colonnes du panneau (1), et une pluralité de cellules (C) disposées aux intersections respectives des paires d'électrodes principales (X, Y), et
un circuit d'entraînement (85, 86, 89) comportant :
• des moyens opérationnels, dans une période de préparation d'adressage (TR) d'une période d'entraînement (Tsf) du panneau (1), pour appliquer une impulsion de préparation d'adressage (Prx2, Pry2) à au moins l'électrode de balayage (Y) de chaque paire d'électrodes principales (X, Y) de telle sorte qu'une différence de potentiel entre les électrodes principales (X, Y) de chaque paire augmente au fil du temps d'une première valeur de consigne à une deuxième valeur de consigne;
• des moyens opérationnels, dans une période d'adressage (TA) de ladite période d'entraînement (Tsf), qui fait suite à ladite période de préparation d'adressage (TR), pour sélectionner des électrodes de balayage (Y) l'une après l'autre dans une séquence de balayage et appliquer une impulsion de balayage (Py) à l'électrode de balayage sélectionnée (Y) et des impulsions d'adresse (Pa) aux électrodes d'adresse (Al~Am) de manière à définir chacune des cellules (C) de la rangée correspondant à l'électrode de balayage sélectionnée (Y) de manière sélective soit dans un état à éclairer soit dans un état à ne pas éclairer conformément aux données d'établissement d'état (Dsf) correspondant à la rangée concernée, et
• des moyens opérationnels, dans une période d'entretien (TS) de ladite période d'entraînement (Tsf), qui fait suite à ladite période d'adressage, pour générer des décharges dans des cellules (C) qui ont été définies dans ledit état à éclairer pendant ladite période d'adressage (TA),
dans lequel ladite période d'entraînement (Tsf) comprend une première et une seconde périodes d'adressage (TA1, TA2), lesdits moyens de sélection étant opérationnels pour sélectionner une première pluralité des électrodes de balayage (Yᵢₘₚₐᵢᵣₑ) l'une après l'autre dans ladite première période d'adressage (TA1), et une seconde pluralité des électrodes de balayage (Yₚₐᵢᵣₑ), qui alterne avec la première pluralité, l'une après l'autre dans ladite seconde période d'adressage (TA2), et
**caractérisé en ce que**
la période d'entraînement (Tsf) inclut en outre, en tant que ladite période de préparation d'adressage (TR), une première période de préparation (TR1) avant le début de la première période d'adressage (TA1), et une seconde période de préparation (TR2), après la fin de la première période d'adressage (TA1) et avant le début de la seconde période d'adressage (TA2),
dans lequel le circuit d'entraînement comporte des moyens opérationnels pour appliquer, avant la première période d'adressage (TA1) de la première période de préparation (TR1), une première impulsion de préparation d'adressage (Pry2 en TR1), en tant qu'impulsion de préparation d'adressage (Prx2, Pry2), à la première pluralité d'électrodes de balayage (Yᵢₘₚₐᵢᵣₑ) à sélectionner dans une séquence de balayage de ladite première période d'adressage (TA1), et
appliquer, avant la seconde période d'adressage(TA2) de la seconde période de préparation d'adresse (TR2), une seconde impulsion de préparation (Pry2 en TR2), en tant qu'impulsion de préparation d'adressage (Prx2, Pry2), à la seconde pluralité d'électrodes de balayage (Yₚₐᵢᵣₑ) à sélectionner dans la séquence de balayage de ladite seconde période d'adressage (TA2), et
dans lequel l'impulsion appliquée aux rangées paires comportant la seconde pluralité des électrodes de balayage dans la seconde période de préparation (TR2) est la même que dans la première période de préparation, et l'impulsion appliquée aux rangées impaires comportant la première pluralité des électrodes de balayage dans la seconde période de préparation (TR2) est la même que des impulsions (Pra1, Pra2) appliquées aux électrodes d'adresse (A1~Am).
